(19) Europäisches Patentamt / European Patent Office / Office européen des brevets

(11) **EP 4 441 008 B1**

(12) **EUROPEAN PATENT SPECIFICATION**

(45) Date of publication and mention
of the grant of the patent:
**08.04.2026 Bulletin 2026/15**

(21) Application number: **22843908.9**

(22) Date of filing: **17.11.2022**

(51) International Patent Classification (IPC):
**C03C 17/28** (2006.01)

(52) Cooperative Patent Classification (CPC):
**C03C 17/28**

(86) International application number:
**PCT/US2022/050176**

(87) International publication number:
**WO 2023/096807 (01.06.2023 Gazette 2023/22)**

(54) **TRIPLE NOTCHED FILTER COVERGLASS FOR HIGH AMBIENT CONTRAST DISPLAY**

DREIFACH GEKERBTES FILTERABDECKGLAS FÜR ANZEIGE MIT HOHEM UMGEBUNGSKONTRAST

VERRE DE COUVERTURE DE FILTRE À TROIS ENCOCHES POUR AFFICHAGE À CONTRASTE AMBIANT ÉLEVÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.11.2021 US 202163283808 P**

(43) Date of publication of application:
**09.10.2024 Bulletin 2024/41**

(60) Divisional application:
**26160626.3**

(73) Proprietor: **Corning Incorporated
Corning, New York 14831 (US)**

(72) Inventor: **JOO, Byung Yun
Ithaca, New York 14850 (US)**

(74) Representative: **Epping - Hermann - Fischer
Patentanwaltsgesellschaft mbH
Schloßschmidstraße 5
80639 München (DE)**

(56) References cited:
**WO-A1-2016/133886      US-A1- 2013 235 559
US-A1- 2016 197 309     US-A1- 2020 363 681**

## Description

### PRIORITY

This application claims the benefit of priority of U.S. Provisional Application Serial No. 63/283,808 filed on November 29, 2021.

### Background

*Field*

The present specification generally relates to coverglasses for displays. In particular, the present specification is directed to coverglasses for displays with triple notch filters for high ambient contrast displays.

*Technical Background*

Coverglass plays a key role in the optical performance of displays under ambient light. Ambient contrast ratio (ACR) of a display is a useful metric to quantify display visibility under ambient illumination. Ambient reflections made by reflectivity of a display module and ambient incident luminance may wash out display images to degrade the ambient contrast ratio of display and the color purity of the display image. US 2013/0235559 A1 shows a display device that uses a spectrally selective optical filter having high reflectivity of visible light except for narrow-band transmission to facilitate a comfortable level of illumination of an observed image on the display device. US 2016/0197309 A1 shows a display comprising a circular polarizer arranged over an array of display pixels, wherein the circular polarizer exhibits transmission peaks aligned with a selected subset of wavelengths and absorbance notches corresponding to a selected subset of wavelengths that cover ranges where light-emitting diodes of the array of display pixels are outputting light. WO 2016/133886 A1 shows a light source which includes a tristimulus notch filter having narrow band pass filters for three wavelengths to enable the light source to emit narrow filtered wavelengths of light.

Accordingly, a need exists coverglasses that improve the ACR of a display under ambient illumination.

### SUMMARY

According to a first aspect, a glass article comprises: a first surface and a second surface opposite the first surface, wherein the first surface and the second surface are separated by a thickness of the glass article; and a triple notch color filter present on the first surface of the glass article, wherein the triple notch filter is configured to have a higher transmission of visible light within a blue wavelength region, within a green wavelength region, and within a red wavelength region than a transmission of visible light outside of the blue wavelength region, the green wavelength region, and the red wavelength region, the blue wavelength region comprises wavelengths from greater than or equal to 410 nm to less than or equal to 490 nm, the green wavelength region comprises wavelengths from greater than or equal to 493 nm to less than or equal to 580 nm, and the red wavelength region comprises wavelengths from greater than or equal to 600 nm to less than or equal to 680 nm. The glass article further comprises an anti-reflective coating on the second surface of glass article, and a reflectance of the glass article for radiation incident on the second surface is less than 2% in the visible spectrum.

A second aspect includes the glass article of aspect 1, wherein the triple notch color filter comprises a light-absorbing dye or pigment.

A third aspect includes the glass article of any one of aspects 1 or 2, wherein the triple notch color filter comprises three light-absorbing dyes or pigments.

A fourth aspect includes the glass article of any one of aspects 2 or 3, wherein the triple notch color filter further comprises a polymer resin.

A fifth aspect includes the glass article of any one of aspects 1 to 4, wherein the blue wavelength region comprises wavelengths from greater than or equal to 425 nm to less than or equal to 475 nm, the green wavelength region comprises wavelengths from greater than or equal to 505 nm to less than or equal to 560 nm, and the red wavelength region comprises wavelengths from greater than or equal to 615 nm to less than or equal to 665 nm.

A sixth aspect includes the glass article of any one of aspects 1 to 5, wherein the blue wavelength region comprises wavelengths from greater than or equal to 440 nm to less than or equal to 460 nm, the green wavelength region comprises wavelengths from greater than or equal to 520 nm to less than or equal to 550 nm, and the red wavelength region comprises wavelengths from greater than or equal to 630 nm to less than or equal to 650 nm.

A seventh aspect includes the glass article of any one of aspects 1 to 6, wherein the transmission of visible light within each of the blue wavelength region, the green wavelength region, and the red wavelength region is greater than or equal to 45% of visible light having wavelengths within blue wavelength region, the green wavelength region, and the red wavelength region.

A eighth aspect includes the glass article of any one of aspects 1 to 6, wherein the transmission of visible light within each of the blue wavelength region, the green wavelength region, and the red wavelength region is greater than or equal to 70% of visible light having wavelengths within blue wavelength region, the green wavelength region, and the red wavelength region.

Additional features and advantages will be set forth in the detailed description that follows, and in part will be readily apparent to those skilled in the art from that description or recognized by practicing the embodiments described herein, including the detailed description that follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

## BRIEF DESCRIPTION OF THE DRAWINGS

FIG. 1A schematically depicts a cross section of a display device;

FIG. 1B schematically depicts a cross section of a display device including a triple notch filter;

FIG. 2 graphically depicts the emission spectrum of a display device and a transmission spectrum of a triple notch filter at various wavelengths of light;

FIG. 3 schematically depicts transmission of light through various layers of a device;

FIG. 4A graphically depicts the intensity of light versus wavelength of an LCD display;

FIG. 4B graphically depicts the radiance of light versus wavelength of an RGB OLED display;

FIG. 4C graphically depicts the radiance of light versus wavelength of a white OLED display;

FIG. 4D graphically depicts the intensity of light versus wavelength of a quantum dot display;

FIG. 4E graphically depicts the intensity of light versus wavelength of a RGB LED display;

FIG. 4F graphically depicts the intensity of the light versus wavelength of a RGB LED display with an advanced color gamut;

FIG. 5 graphically depicts the absorbance of dye materials compared to the emission of a display device at various wavelengths of light; and

FIG. 6 graphically depicts the transmittance of various light absorbing dye systems according to examples of triple notch filters.

## DETAILED DESCRIPTION

Reference will now be made in detail to embodiments of coverglass for displays that improve the ACR of the display, embodiments of which are illustrated in the accompanying drawings. Whenever possible, the same reference numerals will be used throughout the drawings to refer to the same or like parts. Various embodiments of coverglasses will be described herein with specific reference to the appended drawings.

As used herein, the term "ambient illumination" corresponds to light emitted by a D65 light source, as defined by ISO 10526, incident on a surface of a display at a plurality of angles of incidence, ranging from 0° to 90°.

Coverglasses disclosed and described herein improve the ACR and ambient color gamut (ACG) of a display by using a triple notched transmissive color filter on the backside of the coverglass. The triple notched transmissive color filter may include relatively high optical transmission (e.g., greater than or equal to 40%, greater than or equal to 50%, greater than or equal to 60%, greater than or equal to 70%) throughout at least three separate, non-overlapping portions of the visible spectrum, described herein as including a "red wavelength region," a "green wavelength region," and a "blue wavelength region." The red, green, and blue wavelength regions of the triple notch color filter may be spectrally aligned with the red/green/blue spectral emission ranges of a display device, such as quantum dot liquid crystal display (LCD), organic light-emitting display (OLED), or micro light emitting (LED) display having narrow spectral range of (R,G,B) light. In kind, the low transmission range of the color filter is directed to non-emissive wavelength ranges of display device (*i.e.,* non-R,G,B wavelengths), which efficiently blocks unwanted ambient illumination on the display device. The result of using a triple notched color filtered coverglass on a display device results in improved ACR and ACG performance. The triple notch color filters disclosed and described herein are particularly useful in automotive interior displays where ambient light is particularly problematic.

Previously, it has been attempted to improve the ACR and ACG of display by using a semi-transparent "smoky" layered coverglass that is less transmissive for the entire visible spectral range. While these smoky coverglasses are able to attenuate ambient illumination on display device, such smoky layers also attenuate the brightness of display due to semi-transparency of the smoky layer in the entire visible spectral range. Coverglasses with triple notched color filters according to embodiments disclosed and described herein are able to attenuate the ambient illumination to display surface and minimize the brightness loss of display by matching the triple notch color filter wavelength range to R,G,B spectral emission range of the display device.

As disclosed hereinabove, ACR of display is a useful metric to quantify display visibility under ambient illumination. The ACR of a display may be calculated using Equation (1) below:

$$ACR = \frac{Lum_{display}^{white} + Lum_{display}^{Ambient}}{Lum_{display}^{black} + Lum_{display}^{Ambient}} = \frac{Lum_{display}^{white} + R_{display}^{module} Lum_{incident}^{Ambient}}{Lum_{display}^{black} + R_{display}^{module} Lum_{incident}^{Ambient}} \qquad (1)$$

In Equation (1) "*Lum*" denotes luminance and "R" denotes the reflectance of a certain aspect of the display under ambient light. $Lum_{display}^{white}$ refers to the luminance of the display when a light emitting unit (e.g., a backlight unit) thereof is configured to emit a complete emission spectrum thereof (e.g., simulating white light). $Lum_{display}^{black}$ refers the luminance of the display when the light emitting unit is in an "off" state (e.g., emitting no radiation). $Lum_{incident}^{Ambient}$ refers to luminance of ambient radiation incident on the display.

For instance, a display device showing $Lum_{display}^{white} = 1,000 \text{ Cd/m}^2$ and $Lum_{display}^{black} = 1 \text{ Cd/m}^2$ has a contrast ratio of 1000:1. However, ambient reflections made by the reflectivity of display module, $R_{display}^{module}$, and ambient incident luminance, $Lum_{incident}^{Ambient}$, may wash out display images and degrade the contrast ratio of the display and the color purity of the display image.

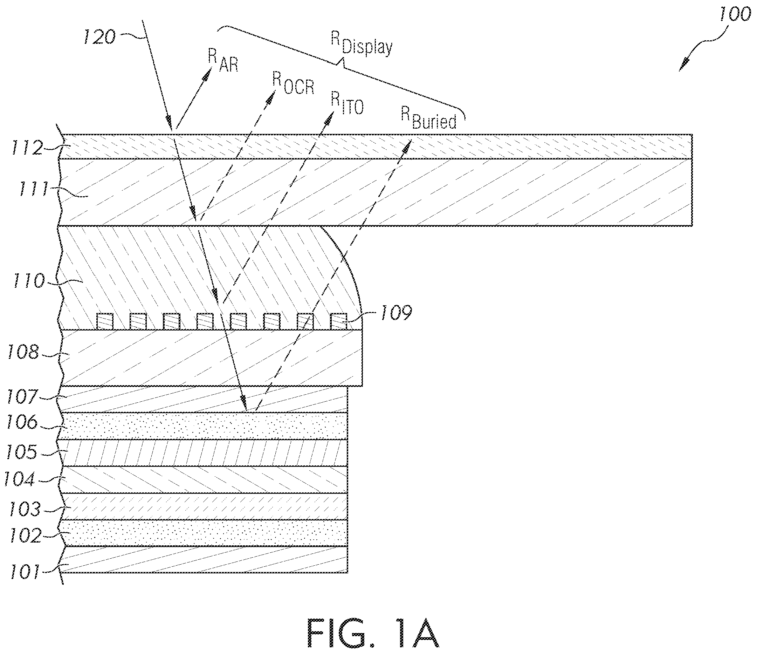

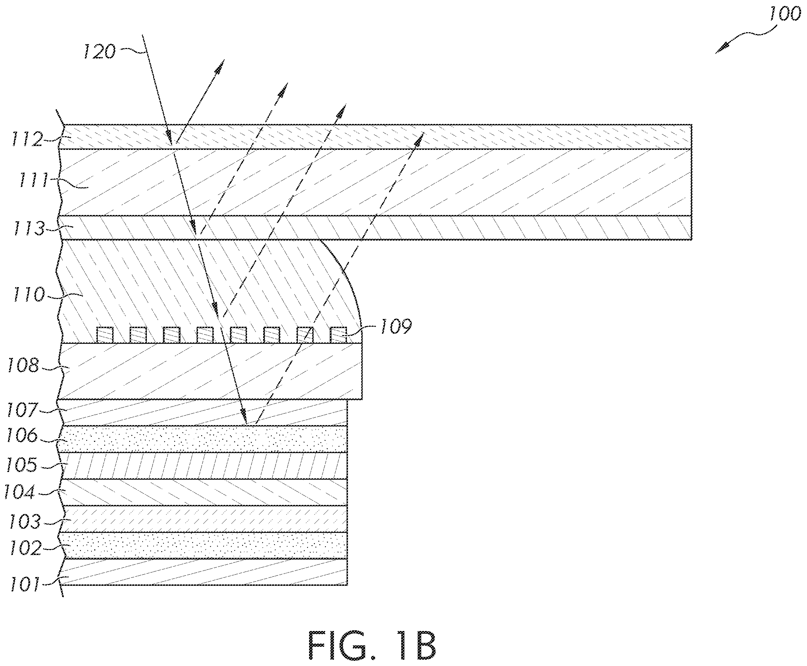

A display used will now be described with reference to FIG. 1A. It should be understood that FIG. 1 shows a display that may be used with coverglass according to embodiments disclosed and described herein, but, other types of displays may be used in conjunction with coverglasses of embodiments disclosed and described herein. With reference now to FIG. 1 a display 100 may comprise a backlight unit (BLU) 101 with a first polarization film 102 positioned on the BLU 101. A thin film transistor (TFT) layer 103 is positioned on the first polarization film 102, and a liquid crystal layer 104 is positioned on the TFT layer 103. A color filter layer 105 is positioned on the liquid crystal layer 104, and a second polarization film 106 is positioned on the color filter layer 105. A first optically clear resin (OCR) layer 107 is positioned on the second polarization layer 106, and a touch screen glass 108 is positioned on the first OCR layer 107. An indium tin oxide (ITO) pattern 109 is present on the touch screen glass 108, and a second OCR layer 110 is positioned to cover the ITO pattern 109 and the touch screen glass 108. A coverglass 111, is positioned on the second OCR layer 110, and an anti-reflective coating 112 is positioned on the coverglass 111.

As shown in FIG. 1, ambient illumination 120 is incident to the antireflective coating 112 and causes ambient reflection on each layer of display 100. The ambient reflection of the front of the cover glass 111 that is transmitted through the anti-reflective coating 112 is shown as $R_{AR}$ in FIG. 1. Because the anti-reflective coating 112 is positioned between the cover glass 111 and the ambient light, $R_{AR}$ will not be significantly reduced by coverglass of embodiments disclosed and described herein where the triple notch color filter is positioned on an opposite side of the coverglass 111 from the anti-reflective coating 112. However, the ambient reflection from the display $R_{Disp}$ in FIG. 1 can be reduced by the coverglass of embodiments disclosed and described herein. The ambient reflection of the display $R_{Disp}$ is made up of the ambient reflection from the second OCR layer 110 (indicated as $R_{OCR}$ in FIG. 1), the ambient reflection from the ITO pattern 109 and the touch screen glass 108 (indicated as $R_{ITO}$ in FIG. 1), and the ambient reflection from the buried layer (indicated as

$R_{Buried}$ in FIG. 1). The buried layer includes the first OCR layer 107, the second polarization film 106, the color filter layer 105, the liquid crystal layer 104, the TFT layer 103, the first polarization film 102, and the BLU 101. Accordingly, the ambient reflection from the buried layer $R_{Buried}$ is the total of the reflection from each of the first OCR layer 107, the second polarization film 106, the color filter layer 105, the liquid crystal layer 104, the TFT layer 103, the first polarization film 102, and the BLU 101. To Simplify, where $R_{OCR}+R_{ITO} + R_{Buried} = R_{Disp}$, then $Lum_{display}^{Ambient}$ becomes Equation (2) below:

$$Lum_{display}^{Ambient} = R_{Disp}Lum_{incident}^{Ambient} = (R_{AR} + (1 - R_{AR})^2 R_{Display})Lum_{incident}^{Ambient} \qquad (2)$$

It is known that $R_{AR}$ is implemented from 0.1% to 2% by using existing anti-reflective coating structures (e.g., comprising alternating layers of high and low index materials of suitable optical thicknesses), and, for existing displays, $R_{Disp}$ is typically measures from 0.5% to 2.5% depending on optical materials of the display layer stack. Accordingly, there are two ways to keep the ACR of the display under ambient illumination. One is to make both $R_{AR}$ and $R_{Disp}$ as low as possible. The other is to block ambient illumination light by using a surface treatment on coverglass. Coverglasses according to embodiments disclosed and described herein are directed to the latter.

To reduce the ambient reflection of the display 100 while not significantly reducing the luminance of the display, it is beneficial to provide a mechanism that has high transmission for spectral wavelengths of light that are emitted by the display 100 (e.g., such as light emitted by the BLU 101 and subsequently transmitted through the additional components of the display 100) and that has low transmission for wavelengths of light that are not within the spectral wavelengths emitted by the display 100.

Accordingly, FIG. 1B depicts a display 100 incorporating a triple notch color filter 113 on a surface of the cover glass 111 opposite the surface of the coverglass 111 where the anti-reflective coating 112 is applied, according to one or more embodiments of the present disclosure. As described below, the triple notch color filter 113 selectively transmits light wavelengths emitted by the BLU while absorbing light wavelengths not emitted by the BLU to improve ACR and AGR.

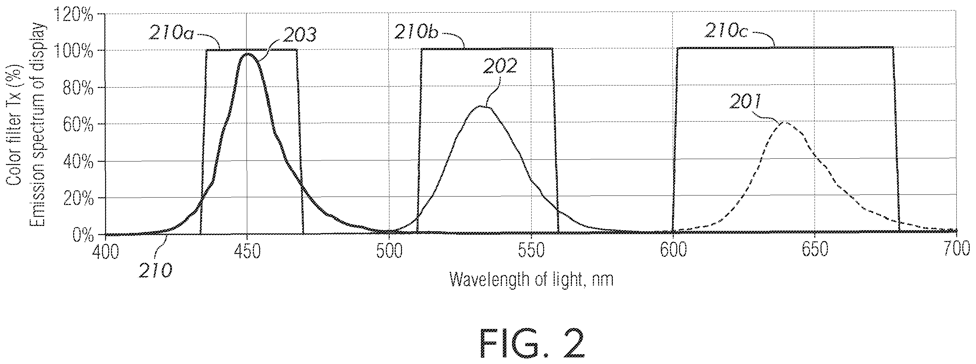

FIG. 2, graphically depicts the emission spectrum of the display 100. The display 100 may be implemented as an LCD display, an OLED display, a micro LED display, a quantum dot display, or other suitable type of display. As can be seen in FIG. 2, the display 100 may emit visible light having a red emission peak 201, a green emission peak 202, and a blue emission peak 203. The transmission peaks represent wavelengths of local maximums in the relative intensity of light emitted by the display 100. The depicted emission spectrum may represent an emission spectrum of the display 100 depicted in FIG. 1A (e.g., without the triple notch filter).

FIG. 2 also graphically depicts a transmission spectrum 210 of the color filter layer depicted in FIG. 1B. As shown, the triple notch filter functions as a triple band-pass filter comprising three pass bands of relatively high transmission. The first pass band is a blue wavelength region 210a around wavelengths of 450 nanometers (nm). The second pass band is a green wavelength region 210b around wavelengths of 525 nm. The third pass band is a red wavelength region 210c around wavelengths of 625 nm. As shown in FIG. 2, the red emission peak, green emission peak, and blue emission peak associated with the emission spectrum are beneficially contained within the red wavelength region, blue wavelength region, and green wavelength region, respectively. Outside of the red wavelength region, blue wavelength region, and green wavelength region, the emission spectrum of the display 100 has relatively low intensity (e.g., less than 25%, 20%, 15%, or 10% of the maximum intensity of the emission spectrum). Such a configuration beneficially facilitates blocking (e.g., absorbing) ambient light in the visible spectrum outside of the red wavelength region, blue wavelength region, and green wavelength region (thereby lowering $R_{display}$ in Equation 2), while having minimal effects on the brightness of the light emitted by the display 100. The triple notch filter depicted in FIG. 1B beneficially improves ambient contrast performance of the display 100, without having as detrimental of an effect on display brightness as certain existing approaches to reducing ambient reflections.

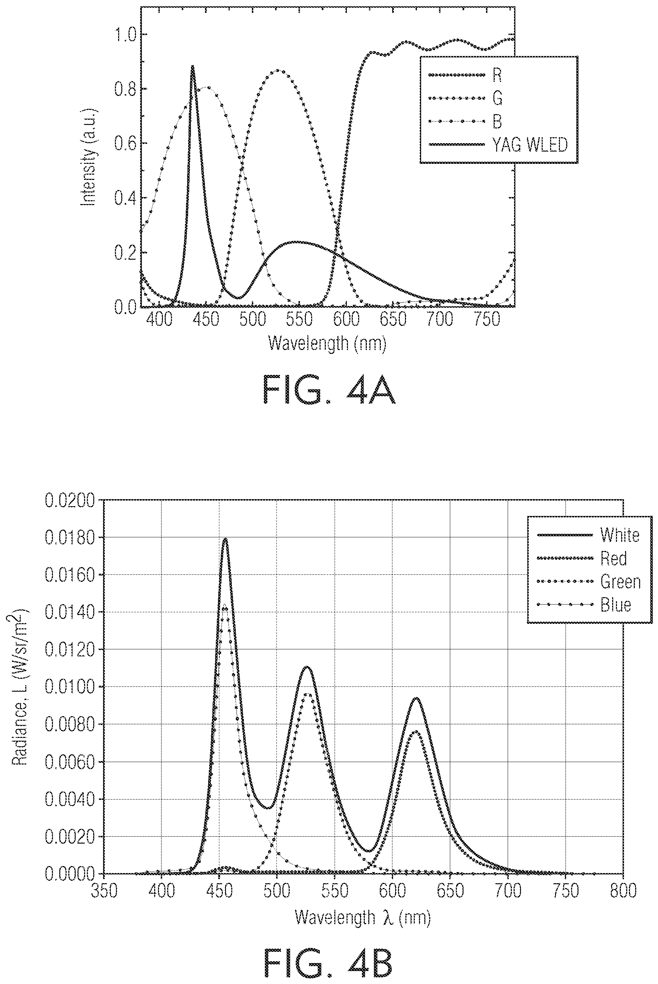

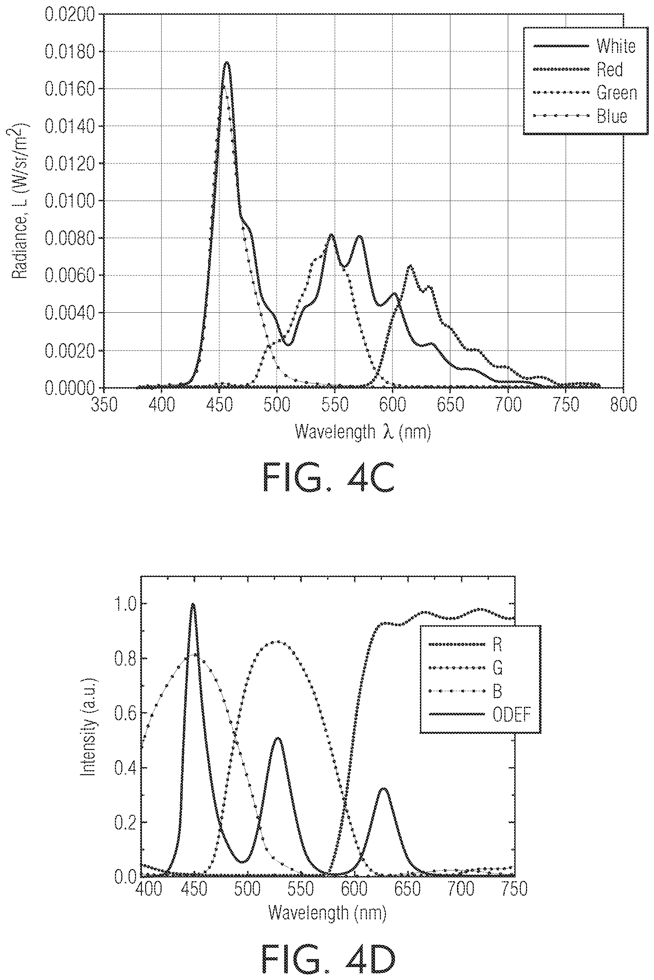

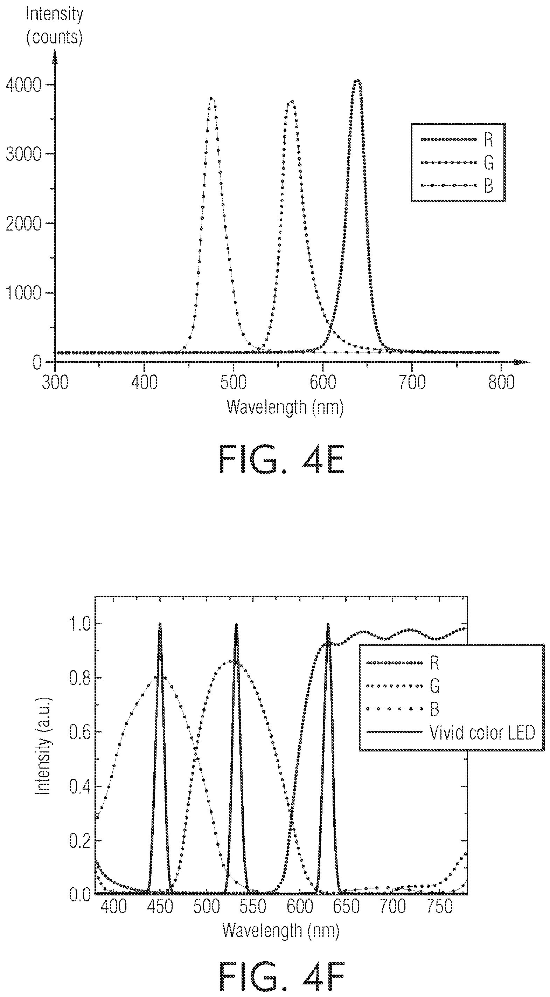

FIG. 4A - FIG. 4F show the intensity of light along the y-axis and wavelength of light along the x-axis that is emitted from various common types of displays. FIG. 4A shows the intensity versus wavelength of an LCD display. As shown in the legend in FIG. 4A, red (R), green (G), and blue (B) light is present and the intensity of a YAG WELD is shown. FIG. 4B shows the intensity versus wavelength of an RGB OLED display. As shown in the legend in FIG. 4B, white, red, green, and blue light is present. FIG. 4C shows the intensity versus wavelength of a white OLED display with an RGB color filter. As shown in the legend in FIG. 4C, white, red, green, and blue light is present. FIG. 4D shows the intensity versus wavelength of a quantum dot (QD) display. As shown in the legend in FIG. 4D, red, green, blue light is present. FIG. 4E shows the intensity versus wavelength of RGB LED display. As shown in the legend in FIG. 4E, red, green, and blue light is present. FIG. 4F shows the intensity versus wavelength of RGB LED display with an advanced color gamut. As shown in the legend in FIG. 4F, red, green, blue light is present and the intensity of a vivid color LED is shown.

Other properties of various displays are provided in Table 1 below.

Table 1

| Feature | Normal LCD | OLED | QD-LCD | Micro LED Display |
|---|---|---|---|---|
| | | White OLED with RGB color filter | LCD backlit with QD film | Micro LED |
| Display luminance (nit) | 500-700 | 100-200 (Max: 700, HDR) | 500-700 (Max: > 2,000, HDR) | 250-2000 |
| Color gamut (NTSC) | 72-80% | 100-106% | 100-106% | 150% |
| Contrast ratio | 5k : 1 | 1M : 1 | 1M : 1 (HDR) | Unknown |
| Display panel buried reflectivity (R_display) | 0.5-2.5% | ~0.5% with circular polarizer | 0.5-2.5% | Unknown |

As shown in Table 2 and FIG. 4A - FIG. 4F, advanced displays, such as quantum dot-LCD, OLED, and micro LED produce higher color gamut and higher contrast ratio image (by increasing color purity of R,G,B emission within relatively narrow spectral ranges and an High dynamic range (HDR) technique) than existing LCD displays. However, the R_display numbers in Table 2 show that there is no dramatic improvement in reduction of buried reflectivity of a display that would enhance display visibility under ambient illumination, such as by improving ambient contrast ratio and ambient color gamut. Accordingly, in all of these displays, washout of the display image resulting in lower contrast ratio and lower color gamut can occur.

Accordingly, if a triple notch filter can be made that has high light transmission in the blue, green, and red wavelength regions described above (and shown in FIG. 2 and FIG. 4A -FIG. 4F) and low transmission of visible light at wavelengths outside of these wavelength regions, the ambient reflection of the display can be reduced. To achieve this end, two types of transmission performance of the triple-notched color filter should be considered.

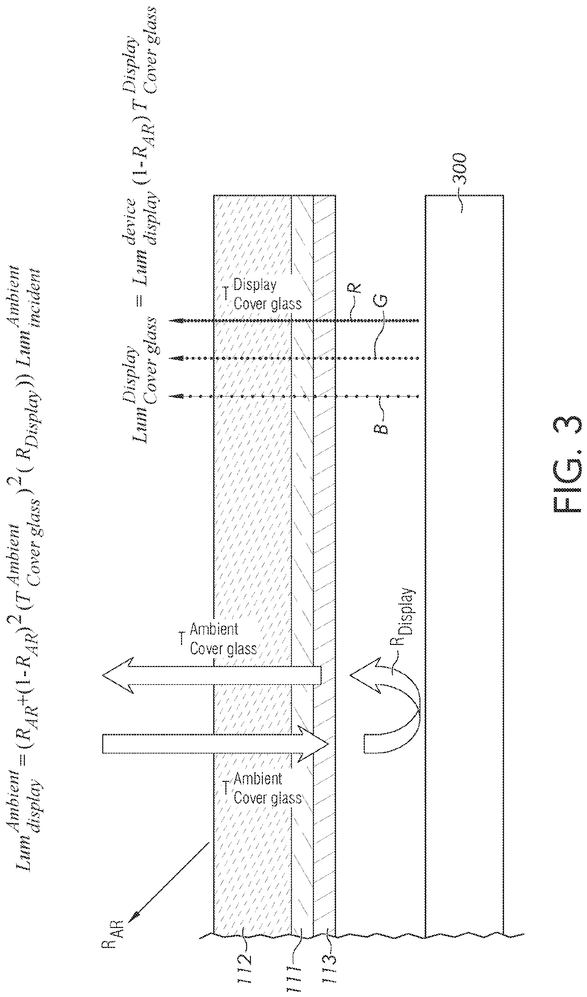

The first type of performance to be considered is the ambient transmission of the coverglass, $T^{Ambient}_{Coverglass}$, for ambient illumination light having all wavelengths. With reference now to FIG. 3, at least a portion of ambient light $T^{Ambient}_{Coverglass}$ is transmitted through the anti-reflective coating 112, the coverglass 111, and the triple notch color filter 113 to the display 300. The display 300 in FIG. 3 includes layers 101 to 110 shown in FIG. 1B. The portion of ambient light $T^{Ambient}_{Coverglass}$ is reflected off the display 300 as $R_{disp}$. and is transmitted back through the triple notch color filter 113, the coverglass 111, and the anti-reflective coating 112. In addition to $T^{Ambient}_{Coverglass}$, blue (B), green (G), and red (R) light emitted by the display (and particularly BLU 101 in FIG. 2B) is transmitted through the triple notch color filter 113, the coverglass 111, and the anti-reflective coating 112 as $T^{Display}_{Coverglass}$. Finally, there is a small amount of reflected light $R_{AR}$ from the anti-reflective coating 112. The equations shown in FIG. 3 will be described in more detail below.

Generally, $T^{Ambient}_{Coverglass}$ attenuates $R_{Display}$ by factor of $(T^{Ambient}_{Coverglass})^2$ as shown in Equation (3) below. The other type of performance to be considered is the transmission of the light emitted from the display through the coverglass, $T^{Display}_{Coverglass}$, and is related with brightness loss of display device as shown in Equation (4) below.

$$Lum^{Ambient}_{display} = R^{module}_{display} Lum^{Ambient}_{incident} = (R_{AR} + (1 - R_{AR})^2 (T^{Ambient}_{Coverglass})^2 (R_{Disp})) Lum^{Ambient}_{incident} \quad (3)$$

$$Lum^{Display}_{Coverglass} = Lum^{device}_{display}(1 - R_{AR})T^{Display}_{Coverglass} \quad (4)$$

In view of the above, and based on Equation (1), to achieve high ambient contrast ratio of the display, $T^{Ambient}_{Coverglass}$ should be made as low as possible and $T^{Display}_{Coverglass}$ should be made as high as possible. Using a triple notched color filter that has high transmission in the blue, green, and red visible wavelength regions as stated above is able to realize $T^{Ambient}_{Coverglass} < T^{Display}_{Coverglass}$.

As noted above, one previous approach for reducing reflection of a coverglass includes providing a semi-transparent smoky layer that reduces the transmission of visible light in all wavelengths and is able to attenuate ambient illumination on display device. However, the smoky layer also attenuates brightness of display due to semi-transparency of the smoky layer yielding a situation where $T_{Coverglass}^{Ambient} = T_{Coverglass}^{Display}$. The consequence of using such a smoky layer is that the ACR of is not dramatically improved. Table 2 below shows a comparison of theoretically modeled properties of a coverglass that has no color filter, a coverglass with a triple notch color filter according to embodiments disclosed and described herein, and a coverglass with a smoky layer.

Table 2

| | Color filter glass | Normal glass / No Color Filter | Triple notch filters of embodiments | Previous solution (Semi-Transparent |
|---|---|---|---|---|
| | | | (Ideal TN/CF glass) | smoky layered glass) |
| | | with AR (Rx = 0.4%) | with AR (Rx = 0.4%) | with AR (Rx = 0.4%) |
| Ambient illumination | 1) T Ambient Cover glass | 99.6 | 51 | 51 |
| Display (QD-LCD) | 2) T Display Cover glass | 99.6 | 90.6 | 51 |
| System reflectivity of Display with AR (Rx_Display: 1.5%, Rx_AR: 0.4%) $R_{AR}$ + (1 - $R_{AR}$)² (T Ambient Cover glass)² (R Display) | | 1.89 | 0.78 | .078 |
| Display brightness, (Device brightness : 1000 Cd/m2) Lum Display Cover glass = Lum device display (1-$R_{AR}$) T Display Cover glass | | 996 | 906 | 508 |
| Ambient contrast ratio (5k lux) | ACR | 32.9 | 68.7 | 40.3 |
| | Relative ratio (%) | 100 | 209 | 122 |

As shown in Table 2 above, coverglass with the triple notch color filter according to embodiments disclosed and described herein significantly reduce the $T_{Coverglass}^{Ambient}$ compared with a coverglass with no filter but does not significantly deduce $T_{Coverglass}^{Display}$ compared with a coverglass with no filter resulting in a coverglass where $T_{Coverglass}^{Ambient} < T_{Coverglass}^{Display}$. Put differently, the coverglass is configured so that the transmission of ambient light through the coverglass is less than the transmission of light emitted from the light emitting unit through the coverglass, also referred to as $T_{Coverglass}^{Ambient} < T_{Coverglass}^{Display}$. This is not achieved by the coverglass with no filter or the coverglass with a smoky layer where $T_{Coverglass}^{Display} = T_{Coverglass}^{Ambient}$. Moreover, the ACR of the coverglass with a triple notch color filter as disclosed and described herein is greater than the ACR of the coverglass with no filter and the coverglass with a smoky layer. Finally, the relative ratio of the ACR is significantly improved compared to a coverglass with no filter and a coverglass with a smoky layer.

Additional simulations of triple notch color filters were conducted targeting the peak visible light emissions of a QD LCD display, which has peak in the blue visible light region at a wavelength of about 450 nm, a peak in the green visible light region at a wavelength of about 533 nm, and a peak in the red visible light region at a wavelength of about 640 nm. Eight simulations were performed; Case 0 had no color filter, Case 1 had high transmission at the target peaks (*i.e.,* 450 nm, 533 nm, and 640 nm) ± 40 nm, Case 2 had high transmission at the target peaks ± 35 nm, Case 3 had high transmission at the target peaks ± 30 nm, Case 4 had high transmission at the target peaks ± 25 nm, Case 5 had high transmission at the target peaks ± 20 nm, Case 6 had high transmission at the target peaks ± 15 nm, and Case 7 had high transmission at the target peaks ± 10 nm. Table 3 shows the results of the simulations.

Table 3

| $RX_{AR}$=0.4 % | Transmitted wavelength range, min, max | | | Coverglass Tx performance | |
|---|---|---|---|---|---|
| Case 0 : No Color filter function | | | | *T Ambient Cover glass* | *T Display Cover glass* |
| | | | | 100 | 100 |
| Case 1 / Notch filter range | Blue<br>Green<br>Red | 410<br>493<br>600 | 490<br>573<br>680 | 81 | 99 |
| Case 2 / Notch filter range | Blue<br>Green<br>Red | 415<br>498<br>605 | 485<br>568<br>675 | 71 | 97 |
| Case 3 / Notch filter range | Blue<br>Green<br>Red | 420<br>503<br>610 | 480<br>563<br>670 | 61 | 95 |
| Case 4 / Notch filter range | Blue<br>Green<br>Red | 425<br>508<br>615 | 475<br>558<br>665 | 51 | 91 |
| Case 5 / Notch filter range | Blue<br>Green<br>Red | 430<br>513<br>620 | 470<br>553<br>660 | 41 | 84 |
| Case 6 / Notch filter range | Blue<br>Green<br>Red | 435<br>518<br>625 | 465<br>548<br>655 | 31 | 73 |
| Case 7 / Notch filter range | Blue<br>Green<br>Red | 440<br>523<br>630 | 460<br>543<br>650 | 20 | 55 |

As shown in Table 3, $T_{Coverglass}^{Ambient}$ is linearly dropped as step width gets decreased from $\pm$ 40 nm to $\pm$ 10 nm. However, $T_{Coverglass}^{Display}$ decreases much more slowly than $T_{Coverglass}^{Ambient}$. Indeed, a quotient $\frac{T_{Coverglass}^{Display}}{T_{Coverglass}^{Ambient}}$ has a maximum value of 2.75 for case 7, with the narrowest step width. The quotient has values of greater than 1.5 for each of cases 3-7, and values of greater than 2.0 for each of cases 5-7. Accordingly, these simulations show that triple notched color filters present on the coverglass of a display is able to realize $T_{Coverglass}^{Ambient} < T_{Coverglass}^{Display}$ for all of the cases and can be customized depending on the desired use, balancing ACR performance with display brightness.

Referring to FIG. 1B and 2, in embodiments, the blue wavelength region 210a of triple notch filter 113 has high transmission of visible light extends in a wavelength range from 410 nm to 490 nm, such as wavelengths from 415 nm to 485 nm, wavelengths from 420 nm to 480 nm, wavelengths from 425 nm to 475 nm, wavelengths from 430 nm to 470 nm, wavelengths from 435 nm to 465 nm, wavelengths from 440 nm to 460 nm, or wavelengths from 445 nm to 455 nm. In embodiments, the triple notch filter 113 has high transmission of visible light in the green wavelength region 210b with wavelengths from 493 nm to 580 nm, such as wavelengths from 495 nm to 575 nm, wavelengths from 500 nm to 570 nm, wavelengths from 505 to 565 nm, wavelengths from 510 to 560 nm, wavelengths from 515 to 555 nm, wavelengths from 520 to 550 nm, wavelengths from 525 to 545 nm, or wavelengths from 530 to 540 nm. In embodiments, the triple notch filter 113 has high transmission of visible light in the red wavelength region 210c with wavelengths from 600 nm to 680 nm, such as wavelengths from 605 nm to 675 nm, wavelengths from 610 nm to 670 nm, wavelengths from 615 nm to 665 nm, wavelengths from 620 nm to 660 nm, wavelengths from 625 nm to 655 nm, wavelengths from 630 nm to 650 nm, or wavelengths from 635 nm to 645 nm. These ranges generally correlate with the boxes 210a - 210c in FIG. 2. Coverglass with triple notch color filters according to embodiments disclosed and described herein have low transmission outside of the above wavelength ranges. Thereby, the transmission of light through the coverglass having a triple notch color filter according to embodiments disclosed and described herein is primarily restricted to the above wavelength ranges.

The term high transmission of the triple notch filter, as used herein, includes transmission greater than or equal to 45% of visible light within the target wavelength region, transmission greater than or equal to 50% of visible light within the target wavelength region, transmission greater than or equal to 55% of visible light within the target wavelength region, transmission greater than or equal to 60% of visible light within the target wavelength region, transmission greater than or equal to 65% of visible light within the target wavelength region, or transmission greater than or equal to 70% of visible light within the target wavelength region.

It should be understood that the value of $T_{Coverglass}^{Display}$ may vary and can be any suitable value. For instance a coverglass with no color filter coating will have a $T_{Coverglass}^{Display}$ that is 100% and an opaque coverglass will have $T_{Coverglass}^{Display}$ that is 0%. The value of $T_{Coverglass}^{Display}$ will vary according to the end use of the display. Generally, the higher the value of $T_{Coverglass}^{Display}$ the more visible the display is to the end user, so a high $T_{Coverglass}^{Display}$ is preferred. Therefore, $T_{Coverglass}^{Display}$ is greater than or equal to 50% and less than or equal to 99%, such as greater than or equal to 60% and less than or equal to 99%, greater than or equal to 70% and less than or equal to 99%, greater than or equal to 80% and less than or equal to 99%, greater than or equal to 90% and less than or equal to 99%, greater than or equal to 50% and less than or equal to 90%, greater than or equal to 60% and less than or equal to 90%, greater than or equal to 70% and less than or equal to 90%, greater than or equal to 80% and less than or equal to 90%, greater than or equal to 50% and less than or equal to 80%, greater than or equal to 60% and less than or equal to 80%, greater than or equal to 70% and less than or equal to 80%, greater than or equal to 50% and less than or equal to 70%, greater than or equal to 60% and less than or equal to 70%, or greater than or equal to 50% and less than or equal to 60%.

Similarly, it should be understood that the value of $T_{Coverglass}^{Ambient}$ may vary and can be any suitable value. For instance a coverglass with no color filter coating will have a $T_{Coverglass}^{Ambient}$ that is 100% and an opaque coverglass will have $T_{Coverglass}^{Ambient}$ that is 0%. The value of $T_{Coverglass}^{Ambient}$ will vary according to the end use of the display. Generally, the lower the value of $T_{Coverglass}^{Ambient}$ the more visible the display is to the end user as a result of less glare, so a low $T_{Coverglass}^{Ambient}$ is preferred. Therefore, $T_{Coverglass}^{Ambient}$ is greater than or equal to 10% and less than or equal to 85%, such as greater than or equal to 20% and less than or equal to 85%, greater than or equal to 30% and less than or equal to 85%, greater than or equal to 40% and less than or equal to 85%, greater than or equal to 50% and less than or equal to 85%, greater than or equal to 60% and less than or equal to 85%, greater than or equal to 70% and less than or equal to 85%, greater than or equal to 80% and less than or equal to 85%, greater than or equal to 10% and less than or equal to 80%, greater than or equal to 20% and less than or equal to 80%, greater than or equal to 30% and less than or equal to 80%, greater than or equal to 40% and less than or equal to 80%, greater than or equal to 50% and less than or equal to 80%, greater than or equal to 60% and less than or equal to 80%, greater than or equal to 70% and less than or equal to 80%, greater than or equal to 10% and less than or equal to 70%, greater than or equal to 20% and less than or equal to 70%, greater than or equal to 30% and less than or equal to 70%, greater than or equal to 40% and less than or equal to 70%, greater than or equal to 50% and less than or equal to 70%, greater than or equal to 60% and less than or equal to 70%, greater than or equal to 10% and less than or equal to 60%, greater than or equal to 20% and less than or equal to 60%, greater than or equal to 30% and less than or equal to 60%, greater than or equal to 40% and less than or equal to 60%, greater than or equal to 50% and less than or equal to 60%, greater than or equal to 10% and less than or equal to 50%, greater than or equal to 20% and less than or equal to 50%, greater than or equal to 30% and less than or equal to 50%, greater than or equal to 40% and less than or equal to 50%, greater than or equal to 10% and less than or equal to 40%, greater than or equal to 20% and less than or equal to 40%, greater than or equal to 30% and less than or equal to 40%, greater than or equal to 10% and less than or equal to 30%, greater than or equal to 20% and less than or equal to 30%, or greater than or equal to 10% and less than or equal to 20%.

As described hereinabove, both $T_{Coverglass}^{Display}$ and $T_{Coverglass}^{Ambient}$ can be simultaneously lowered by applying a filter to the coverglass that absorbs light across all wavelengths of the visible spectrum. Accordingly, lowering either $T_{Coverglass}^{Display}$ or $T_{Coverglass}^{Ambient}$ is readily achievable, but lowering $T_{Coverglass}^{Display}$ and $T_{Coverglass}^{Ambient}$ so that $T_{Coverglass}^{Ambient} < T_{Coverglass}^{Display}$ is not easily achievable with normal color filters. However, triple notch color filters according to embodiments disclosed and described herein are capable of reducing $T_{Coverglass}^{Ambient}$ to a greater extent than $T_{Coverglass}^{Display}$ so that $T_{Coverglass}^{Ambient} < T_{Coverglass}^{Display}$ can be achieved. Regarding the individual values of $T_{Coverglass}^{Display}$ and $T_{Coverglass}^{Ambient}$, they are balanced so that the display can function well for its intended use while keeping the difference between $T_{Coverglass}^{Display}$ and $T_{Coverglass}^{Ambient}$ as high as possible.

A difference between $T_{Coverglass}^{Display}$ and $T_{Coverglass}^{Ambient}$ is greater than or equal to 10, such as greater than or equal to 15, greater than or equal to 20, greater than or equal to 25, greater than or equal to 30, greater than or equal to 35, greater than or equal to 40, or greater than or equal to 45. The difference between $T_{Coverglass}^{Display}$ and $T_{Coverglass}^{Ambient}$ is greater than or equal to 10 and less than or equal to 50, such as greater than or equal to 15 and less than or equal to 50, greater than or equal to 20 and less than or equal to 50, greater than or equal to 25 and less than or equal to 50, greater than or equal to 30 and less than or equal to 50, greater than or equal to 35 and less than or equal to 50, greater than or equal to 40 and less than or equal to 50, greater than or equal to 45 and less than or equal to 50, greater than or equal to 10 and less than or equal to 45, greater than or equal to 15 and less than or equal to 45, greater than or equal to 20 and less than or equal to 45, greater than or equal to 25 and less than or equal to 45, greater than or equal to 30 and less than or equal to 45, greater than or equal to 35 and less than or equal to 45, greater than or equal to 40 and less than or equal to 45, greater than or equal to 10 and less than or equal to 40, greater than or equal to 15 and less than or equal to 40, greater than or equal to 20 and less than or equal to 40, greater than or equal to 25 and less than or equal to 40, greater than or equal to 30 and less than or equal to 40, greater than or equal to 35 and less than or equal to 40, greater than or equal to 10 and less than or equal to 35, greater than or equal to 15 and less than or equal to 35, greater than or equal to 20 and less than or equal to 35, greater than or equal to 25 and less than or equal to 35, greater than or equal to 30 and less than or equal to 35, greater than or equal to 10 and less than or equal to 30, greater than or equal to 15 and less than or equal to 30, greater than or equal to 20 and less than or equal to 30, greater than or equal to 25 and less than or equal to 30, greater than or equal to 10 and less than or equal to 25, greater than or equal to 15 and less than or equal to 25, greater than or equal to 20 and less than or equal to 25, greater than or equal to 10 and less than or equal to 20, greater than or equal to 15 and less than or equal to 20, or greater than or equal to 10 and less than or equal to 15.

The disclosure herein shows the effects of a triple notch color filter on the ACR and ACG and allows for $T_{Coverglass}^{Ambient} < T_{Coverglass}^{Display}$. Any suitable method may be used to apply a triple notch color filter to that has high transmission of visible light in the wavelengths disclosed above to the back of a coverglass. A polymer coating comprising dye or pigment materials are used to provide a triple notch color filter to the back of a coverglass. For example, dye or pigment materials that absorb specific wavelengths of visible light may be combined and applied to the back of a coverglass using a suitable application method. An example of such dye materials are those manufactured by the Yamada chemical company. For instance, dyes that may be used include Yamada FDB-009, Yamada FDB-0007, Yamada FDG-007, Yamada FDR-001, and Yamada FDR-005.

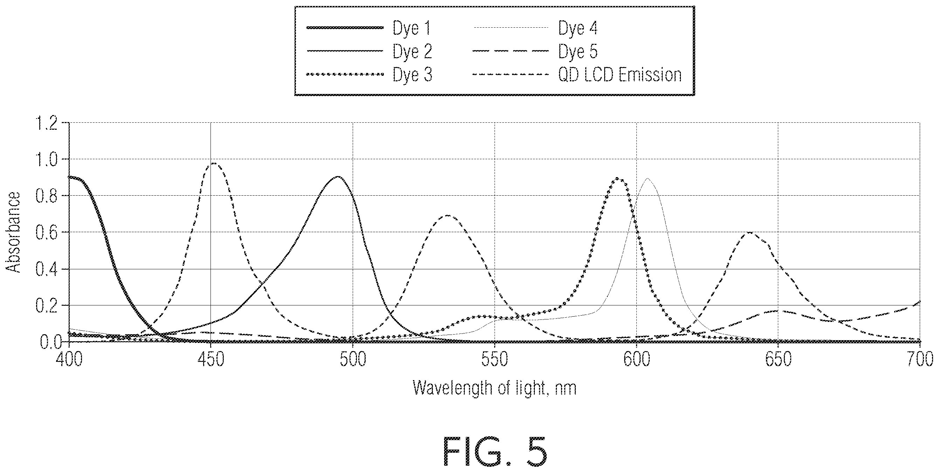

FIG. 5 shows the absorbance spectra of various dyes compared to the emission of a QD LCD display. As shown in FIG. 5, a QD LCD display emits light at wavelength peaks around 450 nm, 533 nm, and 640 nm. Therefore, these peaks represent the three target windows of emitted light where the triple notch color filter should have high transmission. Accordingly, Dye 1 (which may be Yamada FBD-009) has a relatively high absorbance (e.g., of greater than 0.4) for light with wavelengths below 420 nm, Dye 2 (which may be Yamada FBD-007) has a relatively high absorbance for light with wavelengths between 440 nm and 460 nm, Dye 3 and Dye 4 (which may be Yamada FDG-007 and Yamada FDR-001, respectively) have relatively high absorbance for light with wavelengths between 580 nm and 620 nm, and Dye 5 (which may be Yamada FDR-005) has a relatively high absorbance for light with wavelengths between 630 nm and 660 nm. Constructing a triple notch color filter using dyes with absorbance as shown in FIG. 5 allows light around the peak wavelengths of 450 nm, 533 nm, and 640 nm emitted by the QD LCD to have high transmission through a cover glass, and light between these peak wavelengths to have lower transmission, as denoted by the increased absorbance of the dyes outside of these three target windows.

One or more dye or pigment material may be blended with a polymeric resin and applied to the back of a coverglass. The type of polymeric resin used in the mixture is not particularly limited and can be any type of polymeric resin traditionally used on coverglasses and that have limited effects on the transmission of the coverglass. The dye or pigment materials may be added to the polymeric material by any suitable method.

As an example, if the three high transmission windows of the triple notch color filter are targeted around three target windows (1) wavelengths from 425 nm to 475 nm, (2) wavelengths from 510 nm to 560 nm, and (3) wavelengths from 615 nm to 665 nm, then four dye or pigment materials-or four mixtures of dye or pigment materials-may be used to form the triple notch color filter. The first dye or pigment material-or mixture of dye or pigment materials-will absorb light in the visible spectrum below 425 nm; the second dye or pigment material-or mixture of dye or pigment materials-will absorb light in the visible spectrum from 475 nm to 510 nm; the third dye or pigment material-or mixture of dye or pigment materials-will absorb light in the visible spectrum from 560 nm to 615 nm; and the fourth dye or pigment material-or mixture of dye or pigment materials-will absorb light in the visible spectrum above 665 nm. In this way, light in the visible spectrum outside the three target windows will be absorbed by the dye or pigment materials-or mixture of dye or pigment materials-and light within the three target windows will be transmitted.

The transmission of a dye or pigment material or mixture of dye or pigment materials for a particular wavelength can be calculated by Equation (5) below:

$$T(\lambda) = \sum 10^{-Dye\ material\ absorbance_i(\lambda) \times dilution\ control\ factor\ (i)} \qquad (5)$$

In Equation (5), the dye material absorbance is a material constant usually provided by a manufacturer of the dye or pigment material and is based on the Beer-Lambert Law, and the dilution control factor is a scaled factor based on the how the dye or pigment is applied (such as layer thickness and mixture ratio of dye or pigment material in a transparent binder material). For example, the dilution control factor may correspond to a ratio in concentration of a dye material and a transparent binder material (e.g., a polymeric resin). A dilution control factor of 1 means the coating layer is composed only of the dye or pigment material, and a dilution control factor of 2 means the coating layer transmission (Tx) is decreased by $10^{-2}$ (or a factor of 0.01). Using Equation (5) a dye or pigment material or mixture of dye or pigment materials can be selected that absorb light outside of the three target wavelength windows and allows for high transmission within the three target wavelength windows. These dye or pigment materials or mixtures of dye or pigment materials can then be added to a coating material, such as, for example a polymeric resin, and applied to the back of a coverglass. As noted herein, coating materials and methods for coating the coverglass with the coating material comprise a dye or pigment material or mixture of dye or pigment materials are known to a person of ordinary skill in the art.

## EXAMPLES

The examples compared coverglasses with no color filter (Case 0) and a theoretical triple notch color filter (Case 1) with five color filters made from various dye materials. The theoretical triple notch color filter was simulated to have 100% transmission of visible light having wavelengths from 435 nm to 470 nm, 100% transmission of visible light having wavelengths from 510 nm to 560 nm, 100% transmission of visible light having wavelengths from 600 nm to 680 nm, and 0% transmission at all other wavelengths. The dyes used to make the coverglasses of Case 1 to Case 6 include Yamada FBD-009, Yamada FBD-007, Yamada FDG-007, and Yamada FDR-001 using the dilution control factors shown in Table 4 below as determined using Equation (5) above.

Table 4

| Color filter material | Remark | | | | |
|---|---|---|---|---|---|
| Case 0 | No color filter | | | | |
| Case 1 | Ideal triple notch color filter (100% Tx at 435-470 nm /510-560 nm /600-680 nm, 0% Tx at other wavelengths) | | | | |
| Dye Material | FBD-009 | FBD-007 | FDG-007 | FDR-001 | FDR-005 |
| Case 2 | 0 | 3.5 | 0 | 4 | 0 |
| Case 3 | 0.2 | 3 | 0 | 2.8 | 0 |
| Case 4 | 0 | 2 | 0 | 1.8 | 0 |
| Case 5 | 0 | 1 | 0 | 1.3 | 0 |
| Case 6 | 0 | 0.5 | 0 | 0.5 | 0 |

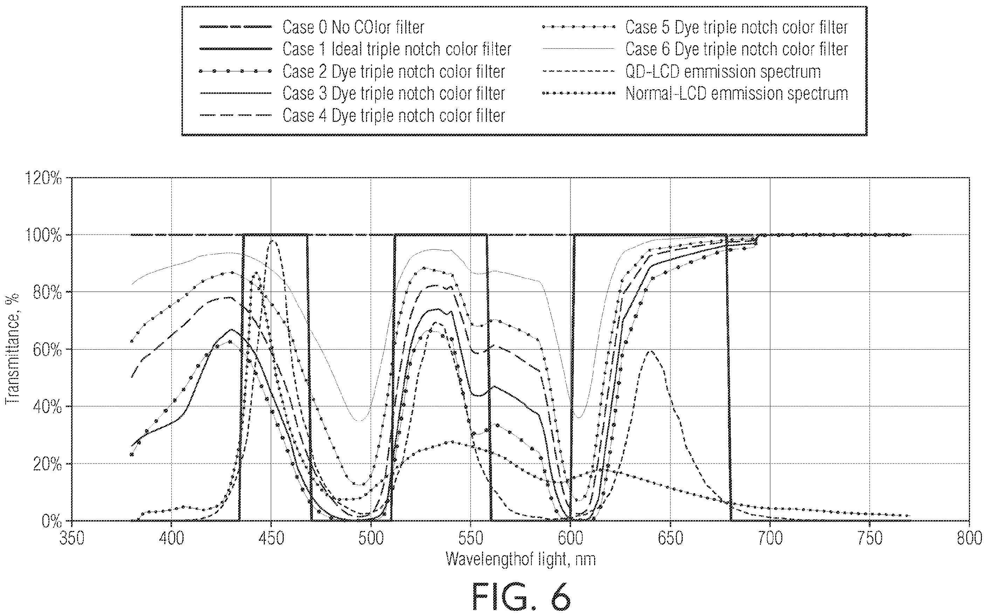

FIG. 6 shows the transmission curves of Case 0 to Case 6 shown in Table 4 above along with the emission spectrum of a QD LCD display and a normal LCD display.

The performance of each of Case 0 to Case 6 shown in Table 4 above was then evaluated with ambient illumination set at 0, 5000 lux, 10,000 lux, and 100,000 lux. The Results of these tests are shown in Tables 5-8 below.

Table 5 - 0 lux ambient illuminance

| Simulation condition | | Display | | | | | | | | | | | | | | |
|---|---|---|---|---|---|---|---|---|---|---|---|---|---|---|---|---|
| | | Quantum Dot LCD | | | | | | | | Normal LCD | | | | | | |
| Antireflection coating %reflectivity | 0.4 | NO C/F | Ideal C/F | Dye color filter | | | | | | NO C/F | Ideal C/F | Dye color filter | | | | |
| Display device reflectivity | 1.5 | | | Case 2 | Case 3 | Case 4 | Case 5 | Case 6 | | | | Case 2 | Case 3 | Case 4 | Case 5 | Case 6 |
| Display device brightness, Cd/m2 | 1000 | | | | | | | | | | | | | | | |
| Ambient illuminance, Lux | 0 | | | | | | | | | | | | | | | |
| Display module, System Transmittance %Tx | | 99.60 | 90.73 | 51.95 | 60.18 | 70.33 | 78.75 | 89.58 | | 99.60 | 64.34 | 36.13 | 44.78 | 56.14 | 65.91 | 82.03 |
| Display module, System Reflectivity %Rx | | 1.89 | 0.86 | 0.55 | 0.64 | 0.78 | 0.95 | 1.32 | | 1.89 | 0.86 | 0.55 | 0.64 | 0.78 | 0.95 | 1.32 |
| Display brightness | | 996.0 | 907.3 | 519.5 | 601.8 | 703.3 | 787.5 | 895.8 | | 996.0 | 643.4 | 361.3 | 447.8 | 561.4 | 659.1 | 820.3 |
| Ambient contrast ratio | Ambient reflected luminance on display module, Cd/m2 | 0.0 | 0.0 | 0.0 | 0.0 | 0.0 | 0.0 | 0.0 | | 0.0 | 0.0 | 0.0 | 0.0 | 0.0 | 0.0 | 0.0 |
| | Ambient Contrast Ratio | 1000 .0 | 1000 .0 | 1000 .0 | 1000 .0 | 1000 .0 | 1000 .0 | 1000 .0 | | 1000 .0 | 1000 .0 | 1000 .0 | 1000 .0 | 1000 .0 | 1000 .0 | 1000 .0 |
| | % Ratio | 100 | 100 | 100 | 100 | 100 | 100 | 100 | | 100 | 100 | 100 | 100 | 100 | 100 | 100 |
| Color gamut (CIE1931 / NTSC) | Ambient color gamut, % | 106.0 | 110.9 | 112.3 | 110.8 | 109.5 | 109.0 | 107.4 | | 77.5 | 101.8 | 94.5 | 89.9 | 86.0 | 84.4 | 79.8 |
| | % Ratio | 100 | 105 | 106 | 104 | 103 | 103 | 101 | | 100 | 131 | 122 | 166 | 111 | 109 | 103 |

(continued)

| Simulation condition | | Display | | | | | | | | | | | | | |
|---|---|---|---|---|---|---|---|---|---|---|---|---|---|---|---|
| | | Quantum Dot LCD | | | | | | | Normal LCD | | | | | | |
| Red (x,y) = (0.670,0.330) | Red/ x | 0.698 | 0.699 | 0.704 | 0.703 | 0.702 | 0.702 | 0.700 | 0.661 | 0.678 | 0.697 | 0.693 | 0.685 | 0.680 | 0.669 |
| | Red/ y | 0.302 | 0.301 | 0.296 | 0.297 | 0.298 | 0.298 | 0.300 | 0.339 | 0.322 | 0.303 | 0.307 | 0.315 | 0.320 | 0.331 |
| Green (x,y) = (0.210,0.710) | Green/ x | 0.264 | 0.250 | 0.251 | 0.257 | 0.260 | 0.259 | 0.263 | 0.334 | 0.266 | 0.318 | 0.332 | 0.340 | 0.336 | 0.340 |
| | Green/ y | 0.713 | 0.727 | 0.727 | 0.722 | 0.719 | 0.718 | 0.715 | 0.629 | 0.712 | 0.665 | 0.652 | 0.644 | 0.642 | 0.634 |
| | Blue/ x | 0.145 | 0.148 | 0.152 | 0.152 | 0.150 | 0.149 | 0.147 | 0.150 | 0.151 | 0.155 | 0.155 | 0.154 | 0.152 | 0.151 |
| Blue (x,y)= (0.140, 0.080) | Blue/ y | 0.052 | 0.043 | 0.036 | 0.037 | 0.040 | 0.044 | 0.047 | 0.043 | 0.038 | 0.032 | 0.032 | 0.034 | 0.037 | 0.039 |

Table 6 - 5,000 lux ambient illuminance

| Simulation condition | | Display | | | | | | | | | | | | | | | |
|---|---|---|---|---|---|---|---|---|---|---|---|---|---|---|---|---|---|
| | | Quantum Dot LCD | | | | | | | | Normal LCD | | | | | | | |
| Antireflection coating %reflectivity | 0.4 | NO C/F | Ideal C/F | Dye color filter | | | | | | NO C/F | Ideal C/F | Dye color filter | | | | | |
| Display device reflectivity | 1.5 | | | Case 2 | Case 3 | Case 4 | Case 5 | Case 6 | | | | Case 2 | Case 3 | Case 4 | Case 5 | Case 6 | |
| Display device brightness, Cd/m2 | 1000 | | | | | | | | | | | | | | | | |
| Ambient illuminance, Lux | 5000 | | | | | | | | | | | | | | | | |
| Display module, System Transmittance %Tx | | 99.60 | 90.73 | 51.95 | 60.18 | 70.33 | 78.75 | 89.58 | | 99.60 | 64.34 | 36.13 | 44.78 | 56.14 | 65.91 | 82.03 | |
| Display module, System Reflectivity %Rx | | 1.89 | 0.86 | 0.55 | 0.64 | 0.78 | 0.95 | 1.32 | | 1.89 | 0.86 | 0.55 | 0.64 | 0.78 | 0.95 | 1.32 | |
| Display brightness | | 996.0 | 907.3 | 519.5 | 601.8 | 703.3 | 787.5 | 895.8 | | 996.0 | 643.4 | 361.3 | 447.8 | 561.4 | 659.1 | 820.3 | |
| Ambient contrast ratio | Ambient reflected luminance on display module, Cd/m2 | 30.0 | 13.7 | 8.8 | 10.1 | 12.5 | 15.2 | 21.0 | | 30.0 | 13.7 | 8.8 | 10.1 | 12.5 | 15.2 | 21.0 | |
| | Ambient Contrast Ratio | 33.1 | 63.2 | 56.7 | 56.9 | 54.4 | 50.3 | 41.9 | | 33.1 | 45.9 | 40.4 | 43.2 | 44.1 | 42.6 | 38.6 | |
| | % Ratio | 100 | 191 | 172 | 172 | 164 | 152 | 127 | | 100 | 139 | 122 | 131 | 133 | 129 | 117 | |
| Color gamut (CIE1931 / NTSC) | Ambient color gamut, % | 84.5 | 99.0 | 99.8 | 99.5 | 96.3 | 93.7 | 89.7 | | 63.0 | 88.8 | 76.8 | 74.1 | 70.9 | 68.4 | 65.4 | |
| | % Ratio | 100 | 117 | 118 | 117 | 114 | 111 | 106 | | 100 | 141 | 122 | 118 | 113 | 109 | 104 | |
| Red (x,y) = (0.670,0.330) | Red/ x | 0.629 | 0.664 | 0.672 | 0.671 | 0.665 | 0.655 | 0.645 | | 0.607 | 0.641 | 0.632 | 0.633 | 0.627 | 0.615 | 0.612 | |
| | Red/ y | 0.307 | 0.303 | 0.299 | 0.300 | 0.301 | 0.301 | 0.303 | | 0.338 | 0.322 | 0.307 | 0.312 | 0.317 | 0.320 | 0.330 | |

EP 4 441 008 B1

14

| Simulation condition | | Display | | | | | | | | | | | | |
|---|---|---|---|---|---|---|---|---|---|---|---|---|---|---|
| | | Quantum Dot LCD | | | | | | | Normal LCD | | | | | |
| Green (x,y) = (0.210,0.710) | Green/ x | 0.267 | 0.253 | 0.254 | 0.260 | 0.263 | 0.261 | 0.266 | 0.332 | 0.269 | 0.318 | 0.332 | 0.339 | 0.334 | 0.338 |
| | Green/ y | 0.682 | 0.710 | 0.709 | 0.705 | 0.701 | 0.697 | 0.690 | 0.607 | 0.687 | 0.645 | 0.636 | 0.628 | 0.624 | 0.615 |
| | Blue/ x | 0.152 | 0.152 | 0.158 | 0.158 | 0.156 | 0.153 | 0.153 | 0.157 | 0.155 | 0.161 | 0.160 | 0.159 | 0.157 | 0.157 |
| Blue (x,y)= (0.140, 0.080) | Blue/ y | 0.063 | 0.049 | 0.047 | 0.048 | 0.049 | 0.052 | 0.057 | 0.055 | 0.044 | 0.041 | 0.042 | 0.043 | 0.046 | 0.050 |

Table 7 - 10,000 lux ambient illuminance

| Simulation condition | | Quantum Dot LCD | | | | | | | Display Normal LCD | | | | | | |
|---|---|---|---|---|---|---|---|---|---|---|---|---|---|---|---|
| Antireflection coating %reflectivity | 0.4 | NO C/F | Ideal C/F | Dye color filter | | | | | NO C/F | Ideal C/F | Dye color filter | | | | |
| Display device reflectivity | 1.5 | | | Case 2 | Case 3 | Case 4 | Case 5 | Case 6 | | | Case 2 | Case 3 | Case 4 | Case 5 | Case 6 |
| Display device brightness, Cd/m2 | 1000 | | | | | | | | | | | | | | |
| Ambient illuminance, Lux | 10000 | | | | | | | | | | | | | | |
| Display module, System Transmittance %Tx | | 99.60 | 90.73 | 51.95 | 60.18 | 70.33 | 78.75 | 89.58 | 99.60 | 64.34 | 36.13 | 44.78 | 56.14 | 65.91 | 82.03 |
| Display module, System Reflectivity %Rx | | 1.89 | 0.86 | 0.55 | 0.64 | 0.78 | 0.95 | 1.32 | 1.89 | 0.86 | 0.55 | 0.64 | 0.78 | 0.95 | 1.32 |
| Display brightness | | 996.0 | 907.3 | 519.5 | 601.8 | 703.3 | 787.5 | 895.8 | 996.0 | 643.4 | 361.3 | 447.8 | 561.4 | 659.1 | 820.3 |
| Ambient contrast ratio | Ambient reflected luminance on display module, Cd/m2 | 60.1 | 27.3 | 17.6 | 20.3 | 24.9 | 30.4 | 41.9 | 60.1 | 27.3 | 17.6 | 20.3 | 24.9 | 30.4 | 41.9 |
| | Ambient Contrast Ratio | 17.3 | 33.1 | 29.7 | 29.8 | 28.4 | 26.3 | 21.9 | 17.3 | 24.0 | 21.1 | 22.6 | 23.0 | 22.2 | 20.2 |
| | % Ratio | 100 | 191 | 172 | 172 | 164 | 152 | 127 | 100 | 139 | 122 | 131 | 133 | 129 | 117 |
| Color gamut (CIE1931 / NTSC) | Ambient color gamut, % | 69.5 | 89.1 | 89.4 | 88.2 | 85.5 | 81.8 | 76.5 | 52.5 | 78.3 | 64.3 | 62.7 | 60.0 | 57.1 | 54.9 |
| | % Ratio | 100 | 128 | 129 | 127 | 123 | 118 | 110 | 100 | 149 | 123 | 120 | 114 | 109 | 105 |
| Red (x,y) = (0.670,0.330) | Red/ x | 0.581 | 0.635 | 0.644 | 0.643 | 0.634 | 0.618 | 0.603 | 0.567 | 0.612 | 0.586 | 0.590 | 0.584 | 0.569 | 0.571 |
| | Red/ y | 0.310 | 0.304 | 0.301 | 0.303 | 0.304 | 0.302 | 0.306 | 0.336 | 0.322 | 0.310 | 0.315 | 0.319 | 0.319 | 0.329 |
| | Green/ x | 0.270 | 0.255 | 0.257 | 0.262 | 0.265 | 0.263 | 0.268 | 0.330 | 0.272 | 0.318 | 0.331 | 0.338 | 0.332 | 0.336 |

EP 4 441 008 B1

(continued)

| Simulation condition | | Quantum Dot LCD | | | | | | | Display Normal LCD | | | | | | |
|---|---|---|---|---|---|---|---|---|---|---|---|---|---|---|---|
| Green (x,y) = (0.210,0.710) | Green/ y | 0.656 | 0.694 | 0.692 | 0.690 | 0.684 | 0.678 | 0.669 | 0.588 | 0.666 | 0.628 | 0.622 | 0.614 | 0.608 | 0.599 |
| | Blue/ x | 0.158 | 0.155 | 0.164 | 0.163 | 0.161 | 0.158 | 0.158 | 0.163 | 0.159 | .0166 | 0.165 | 0.164 | 0.161 | 0.162 |
| Blue (x,y)= (0.140, 0.080) | Blue/ y | 0.074 | 0.055 | 0.056 | 0.057 | 0.058 | 0.060 | 0.066 | 0.067 | 0.051 | 0.050 | 0.051 | 0.052 | 0.054 | 0.060 |

Table 8 - 100,000 lux ambient illuminance

| Simulation condition | | Quantum Dot LCD | | | | | | | Display Normal LCD | | | | | | |
|---|---|---|---|---|---|---|---|---|---|---|---|---|---|---|---|
| Antireflection coating %reflectivity | 0.4 | NO C/F | Ideal C/F | Dye color filter | | | | | NO C/F | Ideal C/F | Dye color filter | | | | |
| Display device reflectivity | 1.5 | | | Case 2 | Case 3 | Case 4 | Case 5 | Case 6 | | | Case 2 | Case 3 | Case 4 | Case 5 | Case 6 |
| Display device brightness, Cd/m2 | 1000 | | | | | | | | | | | | | | |
| Ambient illuminance, Lux | 100000 | | | | | | | | | | | | | | |
| Display module, System Transmittance %Tx | | 99.60 | 90.73 | 51.95 | 60.18 | 70.33 | 78.75 | 89.58 | 99.60 | 64.34 | 36.13 | 44.78 | 56.14 | 65.91 | 82.03 |
| Display module, System Reflectivity %Rx | | 1.89 | 0.86 | 0.55 | 0.64 | 0.78 | 0.95 | 1.32 | 1.89 | 0.86 | 0.55 | 0.64 | 0.78 | 0.95 | 1.32 |
| Display brightness | | 996.0 | 907.3 | 519.5 | 601.8 | 703.3 | 787.5 | 895.8 | 996.0 | 643.4 | 361.3 | 447.8 | 561.4 | 659.1 | 820.3 |
| Ambient contrast ratio | Ambient reflected luminance on display module, Cd/m2 | 601.0 | 273.3 | 175.9 | 202.9 | 249.2 | 303.7 | 419.2 | 601.0 | 273.3 | 175.9 | 202.9 | 249.2 | 303.7 | 419.2 |
| | Ambient Contrast Ratio | 2.7 | 4.3 | 3.9 | 4.0 | 3.8 | 3.6 | 3.1 | 2.7 | 3.3 | 3.0 | 3.2 | 3.2 | 3.2 | 3.0 |
| | % Ratio | 100 | 162 | 149 | 149 | 144 | 135 | 118 | 100 | 126 | 115 | 121 | 122 | 119 | 111 |
| Color gamut (CIE1931 / NTSC) | Ambient color gamut, % | 11.5 | 26.5 | 24.2 | 24.2 | 22.3 | 19.1 | 15.5 | 8.9 | 19.7 | 12.6 | 13.0 | 12.3 | 10.8 | 10.2 |
| | % Ratio | 100 | 232 | 211 | 212 | 195 | 166 | 135 | 100 | 221 | 141 | 145 | 138 | 121 | 114 |
| Red (x,y) = (0.670,0.330) | Red/ x | 0.379 | 0.442 | 0.456 | 0.456 | 0.440 | 0.409 | 0.398 | 0.382 | 0.427 | 0.393 | 0.400 | 0.395 | 0.373 | 0.383 |
| | Red/ y | 0.324 | 0.315 | 0.316 | 0.322 | 0.320 | 0.312 | 0.319 | 0.331 | 0.322 | 0.322 | 0.330 | 0.327 | 0.318 | 0.326 |
| | Green/ x | 0.289 | 0.280 | 0.285 | 0.289 | 0.289 | 0.280 | 0.287 | 0.315 | 0.293 | 0.319 | 0.328 | 0.329 | 0.316 | 0.320 |

(continued)

| Simulation condition | | Quantum Dot LCD | | | | | | | Display Normal LCD | | | | | | |
|---|---|---|---|---|---|---|---|---|---|---|---|---|---|---|---|
| Green (x,y) = (0.210,0.710) | Green/ y | 0.470 | 0.537 | 0.530 | 0.537 | 0.527 | 0.506 | 0.492 | 0.446 | 0.490 | 0.480 | 0.489 | 0.483 | 0.468 | 0.460 |
| | Blue/ x | 0.219 | 0.200 | 0.223 | 0.224 | 0.218 | 0.207 | 0.214 | 0.224 | 0.205 | 0.221 | 0.223 | 0.219 | 0.210 | 0.217 |
| Blue (x,y)= (0.140, 0.080) | Blue/ y | 0.181 | 0.130 | 0.159 | 0.162 | 0.157 | 0.151 | 0.164 | 0.181 | 0.132 | 0.150 | 0.153 | 0.151 | 0.147 | 0.163 |

As shown in Tables 5-8, system reflectivity and transmissivity of display module defined by Equation (6) and (7) below show that the triple notched color filter is able to effectively reduce system reflectivity of display module and brightness loss of display due to system transmissivity. ACR and ACG improvement ratio are strong as ambient illumination lux gets strong. Also, ACR and ACG improvement ratio in QD-LCD is stronger than normal-LCD.

$$R_{display}^{module,system} = R_{AR} + (1 - R_{AR})^2 (Tx_{Coverglass}^{Ambient})^2 (R_{Display}) \tag{6}$$

$$T_{display}^{module,system} = (1 - R_{AR})T_{Coverglass}^{Display} \tag{7}$$

Tables 9 and 10 below show the performance summary made by varying the ambient illumination from 0 lux to 10,000 lux and show that the triple notched color filters according to Case 2 to Case 6 in Table 4 provide good ACR and ACG. Table 9 shows the result for a QD LCD and Table 10 shows the results for a normal LCD.

Table 9 - QD LCD

| | | Quantum Dot LCD, Device brightness 1000 nit, Device color gamut 106%, Device reflectivity 1.5% | | | | | | | | | | | | |
|---|---|---|---|---|---|---|---|---|---|---|---|---|---|---|
| | | Ambient contrast ratio of display | | | | | | | Ambient color gamut of display (CIE 1931) | | | | | |
| | | NO C/F | Ideal C/F | Dye color filter | | | | | NO C/F | Ideal C/F | Dye color filter | | | |
| | | | | Case 2 | Case 3 | Case 4 | Case 5 | Case 6 | | | Case 2 | Case 3 | Case 4 | Case 5 | Case 6 |
| Antireflection coating % reflectivity, coverglass A side | | 0.40 % | 0.40% | 0.40% | 0.40% | 0.40% | 0.40% | 0.40% | 0.40% | 0.40% | 0.40% | 0.40% | 0.40% | 0.40% | 0.40% |
| Display module, System Transmittance %Tx | | 99.6 0 | 90.73 | 51.95 | 60.18 | 70.33 | 78.75 | 89.58 | 99.60 | 90.73 | 51.95 | 60.18 | 70.33 | 78.75 | 89.58 |
| Display module, System Reflectivity %Rx | | 1.89 | 0.86 | 0.55 | 0.64 | 0.78 | 0.95 | 1.32 | 1.89 | 0.86 | 0.55 | 0.64 | 0.78 | 0.95 | 1.32 |
| Display brightness, Cd/m2 | | 996 | 907.2 785 | 519.5 436 | 601.8 295 | 703.2 881 | 787.4 932 | 895.8 287 | 996 | 907.2 785 | 519.5 436 | 601.8 295 | 703.2 881 | 787.4 932 | 895.8 287 |
| Ambient illumination, Lux | 0 | 100 0.0 | 1000. 0 | 1000. 0 | 1000. 0 | 1000. 0 | 1000. 0 | 1000. 0 | 106.0 | 110.9 | 112.3 | 110.8 | 109.5 | 109.0 | 107.4 |
| | 500 | 249. 7 | 399.6 | 371.9 | 373.0 | 361.4 | 342.2 | 300.1 | 103.4 | 109.6 | 111.0 | 109.4 | 108.1 | 107.3 | 105.3 |
| | 1000 | 143. 0 | 250.0 | 228.7 | 229.5 | 220.9 | 206.7 | 176.9 | 101.0 | 108.3 | 109.6 | 108.1 | 106.6 | 105.6 | 103.4 |
| | 2000 | 77.4 | 143.2 | 129.5 | 130.0 | 124.5 | 115.7 | 97.4 | 96.4 | 105.8 | 107.0 | 105.6 | 103.9 | 102.4 | 99.7 |
| | 3000 | 53.3 | 100.5 | 90.5 | 90.9 | 86.9 | 80.5 | 67.4 | 92.1 | 103.4 | 104.5 | 103.1 | 101.3 | 99.4 | 96.2 |
| | 4000 | 40.7 | 77.6 | 69.7 | 70.0 | 66.8 | 61.8 | 51.7 | 88.2 | 101.2 | 102.1 | 100.7 | 98.7 | 96.5 | 92.9 |
| | 5000 | 33.1 | 63.2 | 56.7 | 56.9 | 54.4 | 50.3 | 41.9 | 84.5 | 99.0 | 99.8 | 98.5 | 96.3 | 93.7 | 89.7 |
| | 6000 | 27.9 | 53.4 | 47.9 | 48.1 | 45.9 | 42.4 | 35.4 | 81.1 | 96.8 | 97.6 | 96.3 | 94.0 | 91.1 | 86.8 |
| | 7000 | 24.1 | 46.2 | 41.4 | 41.6 | 39.7 | 36.7 | 30.6 | 77.9 | 94.8 | 95.4 | 94.2 | 91.7 | 88.6 | 84.0 |
| | 8000 | 21.3 | 40.8 | 36.6 | 36.7 | 35.0 | 32.4 | 27.0 | 74.9 | 92.8 | 93.3 | 92.1 | 89.6 | 86.2 | 81.4 |
| | 9000 | 19.1 | 36.5 | 32.7 | 32.9 | 31.4 | 29.0 | 24.2 | 72.1 | 90.9 | 91.3 | 90.1 | 87.5 | 83.9 | 78.9 |
| | 1000 0 | 17.3 | 33.1 | 29.7 | 29.8 | 28.4 | 26.3 | 21.9 | 17.3 | 33.1 | 29.7 | 29.8 | 28.4 | 26.3 | 21.9 |
| | 2000 0 | 9.2 | 17.3 | 15.5 | 15.6 | 14.9 | 13.8 | 11.6 | 50.1 | 73.6 | 73.0 | 72.3 | 69.1 | 64.2 | 58.1 |
| | 5000 0 | 4.3 | 7.6 | 6.9 | 6.9 | 6.6 | 6.2 | 5.3 | 24.7 | 46.5 | 44.5 | 44.3 | 41.4 | 36.7 | 31.3 |
| | 1000 00 | 2.7 | 4.3 | 3.9 | 4.0 | 3.8 | 3.6 | 3.1 | 11.5 | 26.5 | 24.2 | 24.2 | 22.3 | 19.1 | 15.5 |

EP 4 441 008 B1

Table 10 - Normal LCD

Normal LCD, Device brightness 1000 nit, Device color gamut 77%, Device reflectivity 1.5%

| | Ambient contrast ratio of display | | | | | | | Ambient color gamut of display (CIE 1931) | | | | | | |
|---|---|---|---|---|---|---|---|---|---|---|---|---|---|---|
| | NO C/F | Ideal C/F | Dye color filter | | | | | NO C/F | Ideal C/F | Dye color filter | | | | |
| | | | Case 2 | Case 3 | Case 4 | Case 5 | Case 6 | | | Case 2 | Case 3 | Case 4 | Case 5 | Case 6 |
| Antireflection coating % reflectivity, coverglass A side | 0.40% | 0.40% | 0.40% | 0.40% | 0.40% | 0.40% | 0.40% | 0.40% | 0.40% | 0.40% | 0.40% | 0.40% | 0.40% | 0.40% |
| Display module, System Transmittance %Tx | 99.60 | 64.34 | 36.13 | 44.78 | 56.14 | 65.91 | 82.03 | 99.60 | 64.34 | 36.13 | 44.78 | 56.14 | 65.91 | 82.03 |
| Display module, System Reflectivity %Rx | 1.89 | 0.86 | 0.55 | 0.64 | 0.78 | 0.95 | 1.32 | 1.89 | 0.86 | 0.55 | 0.64 | 0.78 | 0.95 | 1.32 |
| Display brightness, Cd/m2 | 996 | 643.4057 | 361.275 | 447.794 | 561.4469 | 659.0661 | 820.3499 | 996 | 643.4057 | 361.275 | 447.794 | 561.4469 | 659.0661 | 820.3499 |
| Ambient illumination, Lux — 0 | 1000.0 | 1000.0 | 1000.0 | 1000.0 | 1000.0 | 1000.0 | 1000.0 | 77.5 | 101.8 | 94.5 | 89.9 | 86.0 | 84.4 | 79.8 |
| 500 | 249.7 | 320.8 | 291.8 | 306.9 | 311.3 | 303.4 | 282.0 | 75.8 | 100.4 | 92.4 | 88.1 | 84.2 | 82.5 | 78.1 |
| 1000 | 143.0 | 191.4 | 171.2 | 181.6 | 184.7 | 179.1 | 164.5 | 74.1 | 99.0 | 90.4 | 86.3 | 82.5 | 80.7 | 76.5 |
| 2000 | 77.4 | 106.2 | 94.0 | 100.3 | 102.1 | 98.8 | 90.0 | 71.1 | 96.2 | 86.6 | 82.9 | 79.3 | 77.3 | 73.4 |
| 3000 | 53.3 | 73.7 | 65.0 | 69.5 | 70.8 | 68.4 | 62.2 | 68.2 | 93.7 | 83.1 | 79.8 | 76.3 | 74.1 | 70.6 |
| 4000 | 40.7 | 56.5 | 49.8 | 53.2 | 54.3 | 52.4 | 47.6 | 65.5 | 91.2 | 79.9 | 76.9 | 73.5 | 71.2 | 67.9 |
| 5000 | 33.1 | 45.9 | 40.4 | 43.2 | 44.1 | 42.6 | 38.6 | 63.0 | 88.8 | 76.8 | 74.1 | 70.9 | 68.4 | 65.4 |
| 6000 | 27.9 | 38.7 | 34.1 | 36.4 | 37.1 | 35.9 | 32.6 | 60.6 | 86.5 | 74.0 | 71.6 | 68.4 | 65.9 | 63.0 |
| 7000 | 24.1 | 33.5 | 29.5 | 31.5 | 32.1 | 31.0 | 28.2 | 58.4 | 84.3 | 71.4 | 69.2 | 66.1 | 63.5 | 60.8 |
| 8000 | 21.3 | 29.6 | 26.0 | 27.8 | 28.4 | 27.4 | 24.9 | 56.3 | 82.3 | 68.9 | 66.9 | 64.0 | 61.2 | 58.7 |
| 9000 | 19.1 | 26.5 | 23.3 | 24.9 | 25.4 | 24.5 | 22.3 | 54.3 | 80.3 | 66.5 | 64.7 | 61.9 | 59.1 | 56.7 |
| 10000 | 17.3 | 24.0 | 21.1 | 22.6 | 23.0 | 22.2 | 20.2 | 17.3 | 24.0 | 21.1 | 22.6 | 23.0 | 22.2 | 20.2 |
| 20000 | 9.2 | 12.6 | 11.2 | 11.9 | 12.1 | 11.7 | 10.7 | 38.4 | 62.6 | 47.9 | 47.3 | 45.2 | 42.2 | 40.7 |
| 50000 | 4.3 | 5.7 | 5.1 | 5.4 | 5.5 | 5.3 | 4.9 | 19.2 | 36.9 | 25.3 | 25.6 | 24.4 | 22.0 | 21.1 |

(continued)

| | | Normal LCD, Device brightness 1000 nit, Device color gamut 77%, Device reflectivity 1.5% | | | | | | | | | | | | | |
| --- | --- | --- | --- | --- | --- | --- | --- | --- | --- | --- | --- | --- | --- | --- | --- |
| | | Ambient contrast ratio of display | | | | | | | Ambient color gamut of display (CIE 1931) | | | | | | |
| | | NO C/F | Ideal C/F | Dye color filter | | | | | NO C/F | Ideal C/F | Dye color filter | | | | |
| | | | | Case 2 | Case 3 | Case 4 | Case 5 | Case 6 | | | Case 2 | Case 3 | Case 4 | Case 5 | Case 6 |
| | 1000 00 | 2.7 | 3.3 | 3.0 | 3.2 | 3.2 | 3.2 | 3.0 | 8.9 | 19.7 | 12.6 | 13.0 | 12.3 | 10.8 | 10.2 |

**Claims**

1. A glass article comprising:

   a first surface and a second surface opposite the first surface, wherein the first surface and the second surface are separated by a thickness of the glass article; and
   a triple notch color filter (113) present on the first surface of the glass article, wherein
   the triple notch color filter (113) is configured to have a higher transmission of visible light within a blue wavelength region (210a), within a green wavelength region (210b), and within a red wavelength region (210c) than a transmission of visible light outside of the blue wavelength region (210a), the green wavelength region (210b), and the red wavelength region (210c),
   the blue wavelength region (210a) comprises wavelengths from greater than or equal to 410 nm to less than or equal to 490 nm,
   the green wavelength region (210b) comprises wavelengths from greater than or equal to 493 nm to less than or equal to 580 nm,
   the red wavelength region (210c) comprises wavelengths from greater than or equal to 600 nm to less than or equal to 680 nm
   the glass article (100) further comprises an anti-reflective coating (112) on the second surface of glass article, and
   a reflectance of the glass article (100) for radiation incident on the second surface is less than 2% in the visible spectrum.

2. The glass article of claim 1, wherein the triple notch color filter (113) comprises a light-absorbing dye or pigment.

3. The glass article of any one of claims 1 or 2, wherein the triple notch color filter (113) comprises three light-absorbing dyes or pigments.

4. The glass article of any one of claims 2 or 3, wherein the triple notch color filter (113) further comprises a polymer resin.

5. The glass article of any one of claims 1 to 4, wherein

   the blue wavelength region (210a) comprises wavelengths from greater than or equal to 425 nm to less than or equal to 475 nm,
   the green wavelength region (210b) comprises wavelengths from greater than or equal to 505 nm to less than or equal to 560 nm, and
   the red wavelength region (210c) comprises wavelengths from greater than or equal to 615 nm to less than or equal to 665 nm.

6. The glass article of any one of claims 1 to 5, wherein

   the blue wavelength region (210a) comprises wavelengths from greater than or equal to 440 nm to less than or equal to 460 nm,
   the green wavelength region (210b) comprises wavelengths from greater than or equal to 520 nm to less than or equal to 550 nm, and
   the red wavelength region (210c) comprises wavelengths from greater than or equal to 630 nm to less than or equal to 650 nm.

7. The glass article of any one of claims 1 to 6, wherein the transmission of visible light within each of the blue wavelength region (210a), the green wavelength region (210b), and the red wavelength region (210c) is greater than or equal to 45% of visible light having wavelengths within blue wavelength region (210a), the green wavelength region (210b), and the red wavelength region (210c).

8. The glass article of any one of claims 1 to 6, wherein the transmission of visible light within each of the blue wavelength region (210a), the green wavelength region (210b), and the red wavelength region (210c) is greater than or equal to 70% of visible light having wavelengths within blue wavelength region (210a), the green wavelength region (210b), and the red wavelength region (210c).

**Patentansprüche**

1. Glasartikel, umfassend:

eine erste Oberfläche und eine zweite Oberfläche, die der ersten Oberfläche gegenüberliegt, wobei die erste Oberfläche und die zweite Oberfläche durch eine Dicke des Glasgegenstandes getrennt sind; und
einen Dreifach-Kerb-Farbfilter (113), der auf der ersten Oberfläche des Glasartikels vorhanden ist, wobei der Dreifach-Kerb-Farbfilter (113) so konfiguriert ist, dass er eine höhere Transmission von sichtbarem Licht innerhalb eines blauen Wellenlängenbereichs (210a), innerhalb eines grünen Wellenlängenbereichs (210b) und innerhalb eines roten Wellenlängenbereichs (210c) aufweist als eine Transmission von sichtbarem Licht außerhalb des blauen Wellenlängenbereichs (210a), des grünen Wellenlängenbereichs (210b) und des roten Wellenlängenbereichs (210c),
der blaue Wellenlängenbereich (210a) Wellenlängen von größer als oder gleich 410 nm bis kleiner als oder gleich 490 nm umfasst,
der grüne Wellenlängenbereich (210b) Wellenlängen von größer als oder gleich 493 nm bis kleiner als oder gleich 580 nm umfasst,
der rote Wellenlängenbereich (210c) Wellenlängen von größer als oder gleich 600 nm bis kleiner als oder gleich 680 nm umfasst
der Glasartikel (100) ferner eine Antireflexionsbeschichtung (112) auf der zweiten Oberfläche des Glasartikels umfasst, und
der Reflexionsgrad des Glasartikels (100) für auf die zweite Oberfläche auftreffende Strahlung weniger als 2 % im sichtbaren Spektrum beträgt.

2. Glasartikel nach Anspruch 1, wobei der Dreifach-Kerb-Farbfilter (113) einen lichtabsorbierenden Farbstoff oder ein Pigment umfasst.

3. Glasartikel nach einem der Ansprüche 1 oder 2, wobei der Dreifach-Kerb-Farbfilter (113) drei lichtabsorbierende Farbstoffe oder Pigmente umfasst.

4. Glasartikel nach einem der Ansprüche 2 oder 3, wobei der Dreifach-Kerb-Farbfilter (113) ferner ein Polymerharz umfasst.

5. Glasartikel nach einem der Ansprüche 1 bis 4, wobei

der blaue Wellenlängenbereich (210a) Wellenlängen von größer als oder gleich 425 nm bis kleiner als oder gleich 475 nm umfasst,
der grüne Wellenlängenbereich (210b) Wellenlängen von größer als oder gleich 505 nm bis kleiner als oder gleich 560 nm umfasst, und
der rote Wellenlängenbereich (210c) Wellenlängen von größer als oder gleich 615 nm bis kleiner als oder gleich 665 nm umfasst.

6. Glasartikel nach einem der Ansprüche 1 bis 5, wobei

der blaue Wellenlängenbereich (210a) Wellenlängen von größer als oder gleich 440 nm bis kleiner als oder gleich 460 nm umfasst,
der grüne Wellenlängenbereich (210b) Wellenlängen von größer als oder gleich 520 nm bis kleiner als oder gleich 550 nm umfasst, und
der rote Wellenlängenbereich (210c) Wellenlängen von größer als oder gleich 630 nm bis kleiner als oder gleich 650 nm umfasst.

7. Glasartikel nach einem der Ansprüche 1 bis 6, wobei die Transmission von sichtbarem Licht innerhalb des blauen Wellenlängenbereichs (210a), des grünen Wellenlängenbereichs (210b) und des roten Wellenlängenbereichs (210c) jeweils größer als oder gleich 45 % des sichtbaren Lichts mit Wellenlängen innerhalb des blauen Wellenlängenbereichs (210a), des grünen Wellenlängenbereichs (210b) und des roten Wellenlängenbereichs (210c) ist.

8. Glasartikel nach einem der Ansprüche 1 bis 6, wobei die Transmission von sichtbarem Licht innerhalb des blauen Wellenlängenbereichs (210a), des grünen Wellenlängenbereichs (210b) und des roten Wellenlängenbereichs (210c) jeweils größer als oder gleich 70 % des sichtbaren Lichts mit Wellenlängen innerhalb des blauen Wellenlängenbereichs (210a), des grünen Wellenlängenbereichs (210b) und des roten Wellenlängenbereichs (210c) ist.

**Revendications**

1. Un article en verre comprenant

   une première surface et une seconde surface opposée à la première surface, sachant que la première surface et la seconde surface sont séparées par une épaisseur de l'article en verre ; et
   un filtre couleur à triple encoche (113) présent sur la première surface de l'article en verre, sachant que
   le filtre couleur à triple encoche (113) est configuré pour avoir une transmission plus élevée de la lumière visible dans une région de longueur d'onde bleue (210a), dans une région de longueur d'onde verte (210b), et dans une région de longueur d'onde rouge (210c) qu'une transmission de la lumière visible en dehors de la région de longueur d'onde bleue (210a), de la région de longueur d'onde verte (210b), et de la région de longueur d'onde rouge (210c),
   la région de longueur d'onde bleue (210a) comprend des longueurs d'onde entre une valeur supérieure ou égale à 410 nm et une valeur inférieure ou égale à 490 nm,
   la région de longueur d'onde verte (210b) comprend des longueurs d'onde entre une valeur supérieure ou égale à 493 nm et une valeur inférieure ou égale à 580 nm,
   la région de longueur d'onde rouge (210c) comprend des longueurs d'onde entre une valeur supérieure ou égale à 600 nm et une valeur inférieure ou égale à 680 nm.
   l'article en verre (100) comprend en outre un revêtement antireflet (112) sur la seconde surface de l'article en verre, et
   le facteur de réflexion de l'article en verre (100) pour un rayonnement incident sur la seconde surface est inférieur à 2 % dans le spectre visible.

2. L'article en verre de la revendication 1, sachant que le filtre couleur à triple encoche (113) comprend un colorant ou un pigment absorbant la lumière.

3. L'article en verre de l'une des revendications 1 ou 2, sachant que le filtre couleur à triple encoche (113) comprend trois colorants ou pigments absorbant la lumière.

4. L'article en verre de l'une des revendications 2 ou 3, sachant que le filtre couleur à triple encoche (113) comprend en outre une résine polymère.

5. L'article en verre de l'une des revendications 1 à 4, sachant que

   la région de longueur d'onde bleue (210a) comprend des longueurs d'onde entre une valeur supérieure ou égale à 425 nm et une valeur inférieure ou égale à 475 nm,
   la région de longueur d'onde verte (210b) comprend des longueurs d'onde entre une valeur supérieure ou égale à 505 nm et une valeur inférieure ou égale à 560 nm, et
   la région de longueur d'onde rouge (210c) comprend des longueurs d'onde entre une valeur supérieure ou égale à 615 nm et une valeur inférieure ou égale à 665 nm.

6. L'article en verre de l'une des revendications 1 à 5, sachant que

   la région de longueur d'onde bleue (210a) comprend des longueurs d'onde entre une valeur supérieure ou égale à 440 nm et une valeur inférieure ou égale à 460 nm,
   la région de longueur d'onde verte (210b) comprend des longueurs d'onde entre une valeur supérieure ou égale à 520 nm et une valeur inférieure ou égale à 550 nm, et
   la région de longueur d'onde rouge (210c) comprend des longueurs d'onde entre une valeur supérieure ou égale à 630 nm et une valeur inférieure ou égale à 650 nm.

7. L'article en verre de l'une des revendications 1 à 6, sachant que la transmission de la lumière visible dans la région de longueur d'onde bleue (210a), la région de longueur d'onde verte (210b) et la région de longueur d'onde rouge (210c) est supérieure ou égale à 45 % de la lumière visible ayant des longueurs d'onde dans la région de longueur d'onde bleue (210a), la région de longueur d'onde verte (210b) et la région de longueur d'onde rouge (210c).

8. L'article en verre de l'une des revendications 1 à 6, sachant que la transmission de la lumière visible dans la région de longueur d'onde bleue (210a), la région de longueur d'onde verte (210b) et la région de longueur d'onde rouge (210c) est supérieure ou égale à 70 % de la lumière visible ayant des longueurs d'onde dans la région de longueur d'onde bleue (210a), la région de longueur d'onde verte (210b) et la région de longueur d'onde rouge (210c).

FIG. 1A

EP 4 441 008 B1

FIG. 1B

EP 4 441 008 B1

FIG. 2

$$Lum_{display}^{Ambient} = (R_{AR} + (1-R_{AR})^2 (T_{Cover\ glass}^{Ambient})^2 (R_{Display})) \, Lum_{incident}^{Ambient}$$

$R_{AR}$

$Lum_{Cover\ glass}^{Display} = Lum_{display}^{device} (1-R_{AR}) \, T_{Cover\ glass}^{Display}$

$T_{Cover\ glass}^{Ambient}$

$T_{Cover\ glass}^{Ambient}$

$T_{Cover\ glass}^{Display}$

112

111

113

$R_{Display}$

B

G

R

300

FIG. 3

FIG. 4A

FIG. 4B

FIG. 4C

FIG. 4D

FIG. 4E

FIG. 4F

FIG. 5

EP 4 441 008 B1

EP 4 441 008 B1

**Legend:**
- Case 0 No COlor filter
- Case 1 Ideal triple notch color filter
- Case 2 Dye triple notch color filter
- Case 3 Dye triple notch color filter
- Case 4 Dye triple notch color filter
- Case 5 Dye triple notch color filter
- Case 6 Dye triple notch color filter
- QD-LCD emmission spectrum
- Normal-LCD emmission spectrum

FIG. 6

**EP 4 441 008 B1**

**Patent documents cited in the description**

- US 63283808
- US 20130235559 A1
- US 20160197309 A1
- WO 2016133886 A1